# FASCICULE DE BREVET EUROPEEN

(11) **EP 0 298 813 B1**
(45) Date de publication et mention de la délivrance du brevet: **29.09.1993**
(21) Numéro de dépôt: 88401566.0
(22) Date de dépôt: 22.06.1988
(51) Int. Cl.: H04M 19/08

(54) **Appareil téléphonique public à connexion permanente**
Öffentliches Fernsprechgerät mit permanenter Verbindung
Public telephone apparatus with permanent connection

(30) Priorité: 24.06.1987 FR 8708862
(43) Date de publication de la demande: 11.01.1989
(73) Titulaire: MONETEL, F-07500 Granges les Valence (FR)
(72) Inventeur: Ayello, Jean-Claude, F-26000 Valence (FR); Serradura, Thierry, F-26000 Valence (FR)
(74) Mandataire: Bloch, Gérard

(56) Documents cités:
- CH-A- 512 162
- DE-A- 2 521 984
- DE-A- 3 528 281
- FR-A- 2 324 175
- GB-A- 2 177 571

## Description

La présente invention concerne les appareils téléphoniques publics, dits publiphones, installés dans des lieux publics, notamment ceux comportant des moyens de taxation. Plus particulièrement, l'invention concerne les publiphones à connexion permanente, dits "on-line", destinés à être raccordés au réseau téléphonique commuté local, et plus précisément à un autocommutateur, par l'intermédiaire d'une unité de raccordement, dite unité de raccordement publiphone URP. Comme moyens de paiement pour la taxation des communications, les usagers de ces publiphones peuvent utiliser, indifféremment, des pièces de monnaie, des cartes de crédit classiques, des cartes à mémoire, ou d'autres moyens encore, équivalents.

Les publiphones à connexion permanente possèdent la particularité de n'être jamais isolés, même à l'état de repos, c'est-à-dire hors des périodes conversationnelles, contrairement aux publiphones à connexion différée,dits "off-line", qui, au courant de repos près, sont isolés à l'état de repos.

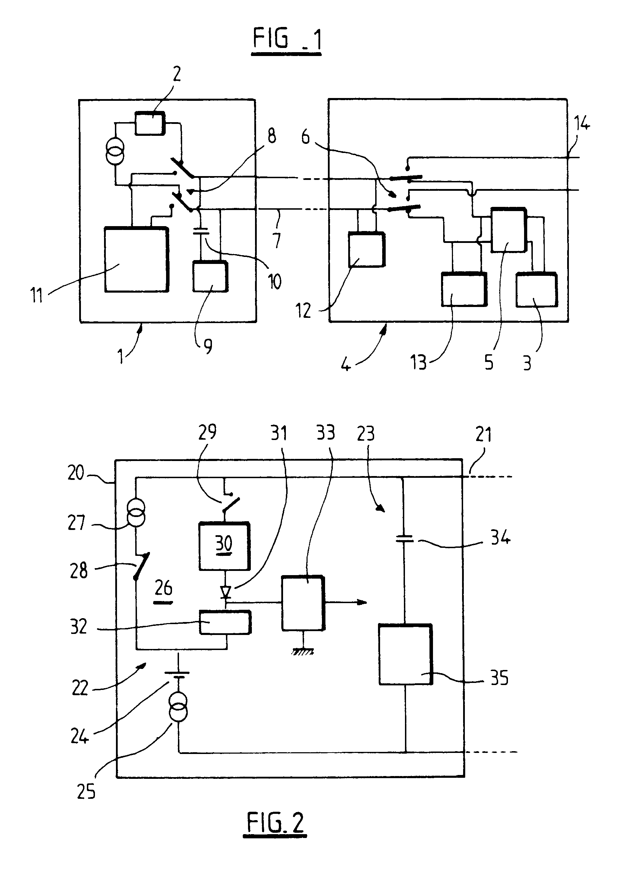

En référence à la figure 1, et schématiquement, un publiphone on-line 1 de l'art antérieur comporte, une batterie 2 pour alimenter ses divers composants et éventuellement fournir, pendant les périodes de conversation, un courant d'appoint au courant de l'autocommutateur. Pendant les périodes de repos, cette batterie est rechargée par une source d'alimentation 3 de l'unité URP associée 4, à travers un transformateur 5 et un relais 6, dans l'unité URP 4, la ligne 7 du publiphone 1 et un autre relais 8, dans le publiphone. Accessoirement, et bien qu'ils ne soient pas directement concernés par le problème à l'origine duquel se trouve l'invention de la présente demande, tel qu'il sera posé plus loin, d'autres éléments du publiphone et de son unité URP peuvent être ici abordés. En parallèle sur la ligne 7, dans le publiphone, est raccordé un ensemble modem-cellule de signalisation 9, en série avec un condensateur 10, le relais 8, après basculement branchant une interface ligne 11 sur la ligne 7 de laquelle est alors isolée la batterie 2.

Dans l'unité URP 4, une cellule de signalisation 12 est branchée en parallèle sur la ligne 7, le basculement du relais 6 coupant un modem 13 et la source d'alimentation 3 de la ligne 7 pour brancher celle-ci sur la ligne de l'autocommutateur 14.

Au repos, la source d'alimentation 3 charge donc la batterie 2 et les deux cellules de signalisation sont en écoute mutuelle .Après décroché du combiné du publiphone, le publiphone et son unité de raccordement sont connectés entre eux et un échange de données s'effectue par les modems 9, 13, jusqu'à ce que, après basculement des relais 6, 8, l'interface ligne 11 du publiphone soit reliée à la ligne 14 de l'autocommutateur.

Une fois le publiphone, par son interface ligne, relié à l'autocommutateur, le courant de l'autocommutateur circule dans le publiphone et la conversation se déroule à l'aide de ce courant et éventuellement un faible courant d'appoint fourni par sa batterie.

En dehors des périodes de conversation, la batterie du publiphone est rechargée, mais pendant les périodes de conversation, c'est elle qui alimente en énergie les composants du publiphone sans pour autant continuer d'être rechargée. Un publiphone de ce type présente donc le risque, compte-tenu du rendement de la batterie, de ne pas pouvoir assurer le trafic demandé.

La présente invention vise à éliminer un tel inconvénient.

A cet effet, l'invention concerne, tout d'abord, un ensemble d'un appareil téléphonique public à connexion permanente et d'une unité de raccordement de l'appareil au réseau téléphonique commuté local, l'appareil comportant une batterie d'alimentation des différents éléments de l'appareil, agencée pour être rechargée par une source d'alimentation de l'unité de raccordement, et une interface ligne destinée, en régime conversationnel, à être raccordée au réseau commuté, ensemble caractérisé par le fait que l'appareil et l'unité de raccordement sont agencés pour que la batterie de l'appareil soit en permanence rechargée par la source d'alimentation de l'unité de raccordement, le réseau commuté est isolé galvaniquement de la source d'alimentation de l'unité de raccordement et le raccordement de l'appareil au réseau commuté est exclusivement effectué par l'unité de raccordement.

Grâce à l'invention, la batterie du publiphone est rechargée en permanence et, du fait de l'isolation galvanique, le réseau commuté, et donc l'autocommutateur, ne peut pas être branché sur la source d'alimentation de l'unité de raccordement et le courant de boucle de l'autocommutateur ne peut pas circuler dans le publiphone, ce qui évite toute fraude.

On notera que le document CH-A-512 162 n'enseigne pas d'ensemble dans lequel l'appareil et l'unité de raccordement sont agencés pour que la batterie de l'appareil soit en permanence rechargée par la source d'alimentation de l'unité de raccordement.

Dans la forme de réalisation préférée de l'ensemble de l'invention, la batterie d'alimentation de l'appareil téléphonique est insérée dans un circuit branché en parallèle sur la ligne reliant l'appareil à l'unité de raccordement et comprenant, en série avec la batterie, un limiteur de courant de repos en régime de repos, et l'interface ligne en régime conversationnel, la source d'alimentation de l'unité de raccordement est branchée en parallèle sur la ligne de l'appareil et le raccordement de l'appareil au réseau commuté est effectué par un relais inséré dans la ligne reliant l'unité de raccordement au réseau commuté.

L'invention concerne aussi un appareil téléphonique public à connexion permanente, destiné à être raccordé au réseau téléphonique commuté local, pour constituer un ensemble selon l'invention, par l'intermédiaire d'une unité de raccordement comprenant une source d'alimentation de laquelle le réseau commuté est isolé galvaniquement, l'appareil comprenant une interface ligne destinée, en régime conversationel, à être raccordée au réseau commuté et une batterie d'alimentation des différents éléments de l'appareil et pouvant être rechargée par la source d'alimentation de l'unité de raccordement, appareil caractérisé par le fait que sa batterie est en permanence rechargée par la source d'alimentation de l'unité de raccordement et qu'il est raccordé au réseau commuté exclusivement par l'unité de raccordement.

L'invention sera mieux comprise à l'aide de la description suivante de la forme de réalisation préférée de l'appareil téléphonique public et de l'ensemble de l'invention, en référence aux dessins annexés, sur lesquels :
- la figure 1 représente un schéma par blocs d'un appareil téléphonique public et de l'unité de raccordement associée, de l'art antérieur ;
- la figure 2 représente un schéma par blocs de l'appareil téléphonique public de l'invention, et
- la figure 3 représente un schéma par blocs de l'unité de raccordement associée à l'appareil de la figure 2.

L'appareil téléphonique public, ou publiphone, 20 de la figure 2 est destiné à être raccordé, par une ligne 21 et une unité de raccordement 40, à un réseau téléphonique commuté local, par l'intermédiaire d'un autocommutateur. L'appareil comporte deux circuits 22,23 en parallèle sur la ligne 21. Le circuit 22 comporte, en série, une batterie 24 d'alimentation des différents éléments de l'appareil, un limiteur de courant 25, pour limiter le courant de boucle, ici à 60 mA, et un circuit parallèle 26. Le circuit 26 comporte, en parallèle, un limiteur de courant de repos 27 et un interrupteur 28, d'une part, et, en série, un interrupteur 29, une interface ligne 30, une diode 31 et un superviseur de tension 32, d'autre part. Entre la diode 31 et le superviseur 32 est connecté un régulateur de tension 33. Le circuit 23 comporte, en série, un condensateur 34 et un ensemble modem-cellule de signalisation 35.

L'unité de raccordement 40 comporte deux tronçons de ligne 41, 42 raccordés, l'un 41, à la ligne 21 du publiphone 20 par l'intermédiaire d'un dispositif de protection 43, l'autre 42, à la ligne 44 de l'autocommutateur par l'intermediaire d'un pont redresseur 45, les deux tronçons 41, 42 étant raccordés par un bouchon 46. L'unité 40 comporte une source d'alimentation 47, ici de 48 V ou 96 V, branchée en parallèle sur le tronçon de ligne 42 par l'intermédiaire de deux inductances (selfs) électroniques 48, 49 et un relais 50.

Dans le tronçon de ligne 42, entre le branchement du relais 50 et le pont 45, sont insérés une paire de condensateurs 51, 52 et un relais 53, avec, en parallèle, un générateur de courant 61. En parallèle sur la ligne du tronçon 42, entre le relais 53 et le pont 45, est branché un détecteur d'appel 54. En parallèle sur la ligne reliant le relais 50 à la source 47 est branché, avec interposition de deux condensateurs 55, 56 reliés à la masse, un multiplexeur 57 relié aux bornes du secondaire, avec point milieu à la masse, d'un transformateur 58, aux bornes du primaire duquel est relié un ensemble duplexeur-modem 59.

Un détecteur de courant 60 est inséré dans l'une des lignes reliant le relais 50 au multiplexeur 57.

En parallèle sur la ligne du tronçon 41 est branchée la sortie d'un amplificateur 62, avec interposition d'une paire de circuits série résistance-condensateur, amplificateur à l'entrée duquel sont connectées les sortes d'un multiplexeur double 63 relié par ses entrées à deux séries de détecteurs 64, 65, 66 et 67, 68, 69, respectivement pour deux batteries de publipbones connectés à l'unité de raccordement.

Ayant décrit la structure du publiphone et de son unité de raccordement, abordons en le fonctionnement.

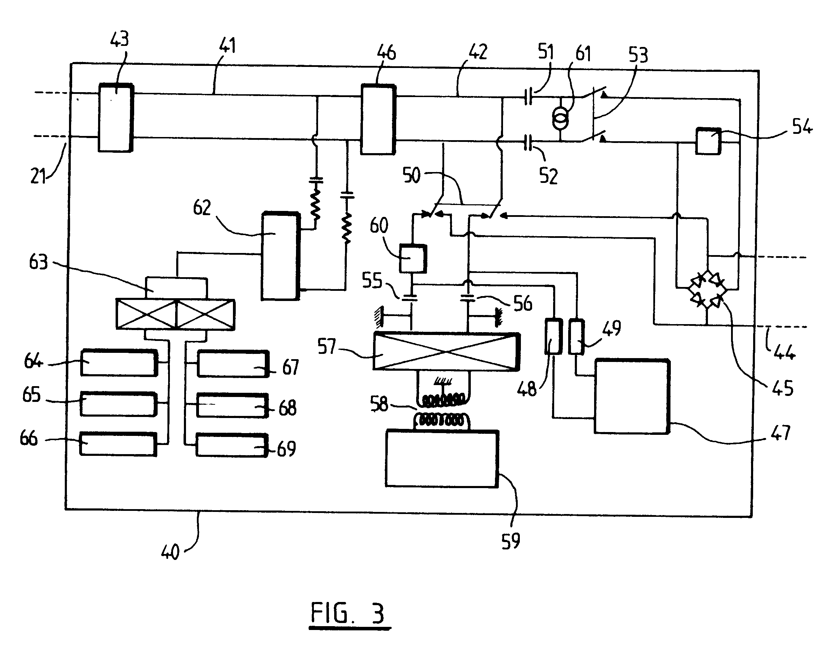

Le publiphone décrit ci-dessus est un appareil à connexion permanente. En fonctionnement, en régime de repos comme en régime conversationnel, le relais 50 de l'unité de raccordement 40 est toujours "ouvert", dans la position représentée sur la figure 3, son basculement permettant d'assurer la continuité de la ligne jusqu'à l'autocommutateur pour une séquence de test automatique.

Le relais 50 de l'unité de raccordement 40 étant toujours en position "ouvert", le publiphone 20 est téléalimenté depuis la source 47 de l'unité 40, à travers les selfs électroniques 48, 49, de faible impédance en courant continu, le relais 50, le bouchon 46, le tronçon de ligne 41, le dispositif de protection 43 et la ligne 21 du publiphone. La batterie 24 du publiphone est donc rechargée en permanence.

Le couplage entre le publiphone 20 et l'autocommutateur s'effectue par les condensateurs 51, 52. Les prises et libérations de boucle de l'autocommutateur ne s'effectuent que par le relais 53, avec bouclage sur le générateur de courant 61. La numérotation émise par le publiphone passe directement par la liaison capacitive 51, 52. On notera que grâce aux condensateurs 51, 52 d'isolation galvanique, le courant de boucle de l'autocommutateur ne circule pas dans le publiphone 20.

En régime de repos, l'interrupteur 29 est ouvert et l'interrupteur 28 fermé, le limiteur 27 jouant son rôle, pour limiter le courant, ici, à 50 mA. En régime conversationnel, c'est l'inverse, l'interface ligne 30 étant alors en série avec la batterie 24, et limitant le courant, toujours, ici, à 50 mA.

La tension d'alimentation des éléments, pas tous représentés car parfaitement connus de l'homme de métier, de l'appareil 20 est fournie par le régulateur 33. C'est le superviseur 32 qui permet, en cas de chute de tension à la sortie du régulateur 33, de faire appel, à titre d'appoint, à la batterie 24.

Au repos, l'ensemble 35 de l'appareil 20 et l'ensemble 59 de l'unité de raccordement 40 sont en écoute mutuelle ; ce sont elles qui, au décroché du combiné, non représenté, de l'appareil 20, permettent à l'appareil 20 d'appeler l'unité 40 et d'établir, après acquittement de l'unité 40, leur connexion, avant qu'ils n'échangent leurs données par les modems 35, 59 et que l'appareil 20 ne demande la ligne de l'autocommutateur 44 à l'unité de raccordement 40.

Abordons maintenant plus en détails le dialogue bilatéral entre le publiphone 20 et son unité de raccordement 40.

La transmission des données du publiphone 20 vers l'unité de raccordement 40 s'effectue, sans modems, à une fréquence de 18 kHz. Dans l'autre sens, la transmission s'effectue à une fréquence de 2100 Hz. Les détecteurs 66, 69 de l'unité de raccordement 40 sont précisément à 18 kHz, le publiphone 20 comportant un oscillateur à 18 kHz. Le bouchon 46 évite au correspondant, à l'autre bout de la ligne, d'entendre ce dialogue. Avec des modems, la fréquence d'appel du publiphone est de 4800 Hz reçue sur l'un des détecteurs 64, 67, le dialogue se poursuivant entre les modems du publiphone et de l'unité de raccordement à 1200 bauds.

Le dialogue entre le publiphone 20 et l'unité de raccordement se limite à des envois d'ordres suivis d'envois d'acquittements.

Dans le sens publiphone vers l'unité de raccordement, il s'agit de demandes de prise de ligne, c'est-à-dire de demandes de fermeture du relais 53, et de demandes de libération de ligne, ou d'ouverture du relais 53. Dans les deux cas, le publiphone transmet, à chaque fois, une impulsion rectangulaire de durée déterminée, l'unité de raccordement acquitte, au bout d'un temps également déterminé, par une autre impulsion rectangulaire toujours de durée déterminée, et exécute l'ordre au bout d'une durée précise. Si le publiphone ne reçoit pas d'acquittement, il répète son ordre, un nombre de fois limité.

Dans le sens unité de raccordement vers publiphone, il s'agit de demandes de déclenchement de sonnerie et de suppression de sonnerie. La procédure est ici similaire à celle des demandes du publiphone. Il s'agit encore de demandes de mise en état de test et de suppression de cet état. Ici, toutefois, la procédure de suppression de l'état de test est un peu particulière, l'unité de raccordement changeant d'état avant d'envoyer son ordre de suppression au publiphone, et le publiphone changeant d'état avant l'émission de son acquittement.

Parallèlement aux demandes de prise et de libération de ligne, et de déclenchement et de suppression de sonnerie, un signal de signalisation est émis, en l'absence de modems à la fréquence de 18 kHz aussi, par le publiphone pour permettre à l'unité de raccordement de s'assurer de la présence du publiphone à l'extrémité de la ligne téléphonique, quelle que soit la phase de fonctionnement du publiphone. Le signal de signalisation est émis de façon cyclique.

Parallèlement encore, le publiphone doit émettre un signal d'écho, après reconnaissance par lui d'impulsions de taxes valides à la fréquence de 12 kHz, ou de 50 Hz, qui lui sont transmises par l'autocommutateur du réseau commuté, via l'un des détecteurs 65, 68 de l'unité de raccordement.

Les signaux de signalisation et d'écho-taxe du publiphone sont les mêmes. Comme l'émission du signal de signalisation et la réception d'une taxe peuvent être simultanées, en raison du fait qu'il est impossible de définir avec suffisamment de précision la probabilité d'arrivée d'une taxe, le publiphone et l'unité de raccordement traitent simultanément la signalisation et le signal de taxe.

Les moyens d'établissement du dialogue bilatéral entre le publiphone et l'unité de raccordement, d'émission de la signalisation et de l'écho-taxe constituent les moyens de supervision du publiphone.

## Revendications

1. Ensemble d'un appareil téléphonique public (20) à connexion permanente et d'une unité (40) de raccordement de l'appareil (20) au réseau téléphonique commuté local (44), l'appareil (20) comportant une batterie (24) d'alimentation des différents éléments de l'appareil, agencée pour être rechargée par une source d'alimentation (47) de l'unité de raccordement (40), et une interface ligne (30) destinée, en régime conversationnel, à être raccordée au réseau commuté (44), ensemble caractérisé par le fait que l'appareil (20) et l'unité de raccordement (40) sont agencés pour que la batterie (24) de l'appareil soit en permanence rechargée par la source d'alimentation (47) de l'unité de raccordement (40), le réseau commuté (44) est isolé galvaniquement (51,52) de la source d'alimentation (47) de l'unité de raccordement (40) et le raccordement de l'appareil (20) au réseau commuté (44) est exclusivement effectué (53) par l'unité de raccordement (40).

2. Ensemble selon la revendication 1, dans lequel la batterie d'alimentation (24) de l'appareil téléphonique (20) est insérée dans un circuit (22) branché en parallèle sur la ligne (21) reliant l'appareil (20) à l'unité de raccordement (40), et comprenant, en série avec la batterie (24), un limiteur (27) du courant de repos en régime de repos, et l'interface ligne (30) en régime conversationnel.

3. Ensemble selon l'une des revendications 1 et 2, dans lequel la source d'alimentation (47) de l'unité de raccordement (40) est branchée en parallèle sur la ligne (21) de l'appareil téléphonique.

4. Ensemble selon la revendication 3, dans lequel le branchement de la source d'alimentation (47) sur la ligne (21) de l'appareil téléphonique (20) est effectué par l'intermédiaire d'un relais de test (50).

5. Ensemble selon l'une des revendications 3 et 4, dans lequel le branchement de la source d'alimentation (47) de l'unité de raccordement (40) sur la ligne (21) de l'appareil téléphonique (20) est effectué par l'intermédiaire de deux selfs électroniques (48,49).

6. Ensemble selon l'une des revendications 1 à 5, dans lequel le raccordement de l'appareil (20) au réseau commuté est effectué par un relais (53) inséré dans la ligne (44) reliant l'unité de raccordement (40) au réseau commuté.

7. Ensemble selon la revendication 6, dans lequel des condensateurs (51,52), insérés dans la ligne reliant l'unité de raccordement (40) à l'appareil (20), entre le relais (53) et l'appareil (20), isolent galvaniquement le réseau commuté (44) de la source d'alimentation (47).

8. Ensemble selon l'une des revendications 6 et 7, dans lequel un générateur de courant (61), en parallèle sur le relais de prise de ligne (53), assure, du côté du réseau commuté, le bouclage du courant de boucle.

9. Appareil téléphonique public (1) à connexion permanente, destiné à être raccordé au réseau téléphonique commuté local (44), pour constituer un ensemble selon l'une des revendications 1 à 8, par l'intermédiaire d'une unité de raccordement (40) comprenant une source d'alimentation (47) de laquelle le réseau commuté (44) est isolé galvaniquement (51,52), l'appareil (1) comprenant une interface ligne (30) destinée, en régime conversationel, à être raccordée au réseau commuté (44) et une batterie (24) d'alimentation des différents éléments de l'appareil et pouvant être rechargée par la source d'alimentation (47) de l'unité de raccordement, appareil caractérisé par le fait que sa batterie (24) est en permanence rechargée par la source d'alimentation (47) de l'unité de raccordement (40) et qu'il est raccordé (53) au réseau commuté (44) exclusivement par l'unité de raccordement (40).

## Claims

1. Assembly of a public telephone apparatus (20) with permanent connection and a unit (40) for connecting the apparatus (20) to the local switched telephone network (44), the apparatus (20)
comprising a battery (24) for supplying the different elements of the apparatus with power, adapted for being recharged by a power supply source (47) of the connection unit (40), and a line interface (30) intended to be connected to the switched network (44) during conversation periods, assembly characterized by the fact that the apparatus (20) and the connection unit (40) are adapted so that the battery (24) of the apparatus is permanently recharged by the power supply source (47) of the connection unit (40), the switched network (44) is galvanically isolated (51,52) from the power supply source (47) of the connection unit (40) and connection of the apparatus (40) to the switched network (44) is provided (53) exclusively by the connection unit (40).

2. Assembly according to claim 1, wherein the power supply battery (24) of the telephone apparatus (20) is inserted in a circuit (22) connected in parallel across the line (21) connecting the apparatus (20) to the connection unit (40) and comprising, in series with the battery (24), a limiter (27) limiting the quiescent current under rest conditions and the line interface (30) under conversation conditions.

3. Assembly according to one of claims 1 and 2, wherein the power supply source (47) of the connection unit (40) is connected in parallel across the line (21) of the telephone apparatus.

4. Assembly according to claim 3, wherein connection of the power supply source (47) to the line (21) of the telephone apparatus (20) is provided through a test relay (50).

5. Assembly according to one of claims 3 and 4, wherein connection of the power supply source (47) to the line (21) of the telephone apparatus (20) is provided through two electronic self inductances (48,49).

6. Assembly according to one of claims 1 to 6, wherein connection of the apparatus (20) to the switched network is provided by a relay (53) inserted in the line (44) connecting the connection unit (40) to the switched network.

7. Assembly according to claim 6, wherein the capacitors (51,52), inserted in the line connecting the connection unit (40) to the apparatus (20), between the relay (53) and the appartus (20), isolate the switched network (44) galvanically from the power supply source (47).

8. Assembly according to one of claims 6 and 7, wherein a current generator (61), in parallel across the line connection relay (53) provides, on the switched network side, loping of the loop current.

9. Public telephone apparatus (1) with permanent connection, intended to be connected to the local switched telephone network (44), for forming an assembly according to one of claims 1 to 8, through a connection unit (40) comprising a power supply source (47) from which the switched network (44) is galvanically isolated (51,52), the apparatus (1) comprising a line interface (30) intended, during conversation periods, to be connected to the switched network (44) and a battery (24) for supplying the different elements of the apparatus with power and being possibly recharged by the power supply source (47) of the connection unit, apparatus characterized by the fact that its battery (24) is permanently recharged by the power supply source (47) of the connection unit (40) and that it is connected (53) to the switched network (44) exclusively by the connection unit (40).

## Patentansprüche

1. Anlage, bestehend aus einem öffentlichen Fernsprechgerät (20) mit permanenter Verbindung und aus einer Einheit (40) zum Anschluß des Gerätes (20) an das örtliche Wählvermittlungsfernsprechnetz (44), wobei das Gerät (20) eine Batterie (24) zur Anspeisung verschiedener Elemente des Gerätes, die mittels einer Stromversorgung (47) der Anschlußeinheit (40) wiederaufgeladen wird, und eine Leitungsschnittstelle (30), die im Sprechbetrieb mit dem Wählvermittlungsnetz (44) verbunden ist, umfaßt, eine Anlage, dadurch gekennzeichnet, daß das Gerät (20) und die Anschlußeinheit (40) so konzipiert sind, daß die Batterie (24) des Gerätes permanent durch die Stromversorgung (47) der Anschlußeinheit (40) wiederaufgeladen wird, das Wählvermittlungsnetz (44) von der Stromversorgung (47) der Anschlußeinheit (40) galvanisch isoliert (51, 52) ist und der Anschluß des Gerätes (20) an das Wählvermittlungsnetz (44) ausschließlich über die Anschlußeinheit (40) erfolgt (53).

2. Anlage nach Anspruch 1, bei der die Anspeisungbatterie (24) des Fernsprechgerätes (20) in eine SchluBleitung (22) geschaltet ist, die parallel an die Leitung (21), welche das Gerät (20) mit der Anschlußeinheit (40) verbindet, geschaltet ist und, jeweils in Serie mit der Batterie (24), im Ruhebetrieb einen Beqrenzer (27) des Ruhestromes und im Sprechbetrieb die Leitungsschnittstelle (30) umfaßt.

3. Anlage nach einem der Ansprüche 1 und 2, bei der die Stromversorgung (47) der Anschlußeinheit (40) parallel an die Leitung (21) des Fernsprechgerätes geschaltet ist.

4. Anlage nach Anspruch 3, bei der der Anschluß der Stromversorgung (47) an die Leitung (21) des Fernsprechgerätes (20) mittels eines Prüfrelais (50) erfolgt.

5. Anlage nach einem der Ansprüche 3 und 4, bei der der Anschluß der Stromversorgung (47) der Anschlußeinheit (40) an die Leitung (21) des Fernsprechgerätes (20) mittels zweier elektronischer Drosseln (48, 49) erfolgt.

6. Anlage nach einem der Ansprüche 1 bis 5, bei der der Anschluß des Gerätes (20) an das Wählvermittlungsnetz über ein Relais (53) erfolgt, das in die Leitung (44), welche die Anschlußeinheit (40) mit dem Wählverbindungsnetz verbindet, geschaltet ist.

7. Anlage nach Anspruch 6, bei der Kondensatoren (51, 52), die in der Leitung, welche die Anschlußeinheit (40) mit dem Gerät (20) verbindet, zwischen das Relais (53) und das Gerät (20) geschaltet sind, das Wählvermittlungsnetz (44) galvanisch von der Stromversorgung (47) isolieren.

8. Anlage nach einem der Ansprüche 6 und 7, bei der ein Stromgenerator (61), der parallel zum Relais für den Leitungsanschluß (53) geschaltet ist, auf der Seite des Wählvermittlungsnetzes die Rückführung des Schleifenstromes sicherstellt.

9. Öffentliches Fernsprechgerät (1) mit permanenter Verbindung, dazu bestimmt, an das örtliche Wählvermittlungsfernsprechnetz (44,) angeschlossen zu Verden, um eine Anlage nach einem der Ansprüche 1 bis 8 zu bilden, wobei der Anschluß mittels einer Anschlußeinheit (40) erfolgt, welche eine Stromversorgung (47) enthält, von der das Wählvermittlungsnetz (44) galvanisch isoliert ist (51, 52), ei], Gerät (1), umfassend eine Leitungsschnittstelle (30), die im Sprechbetrieb mit dem Wählvermittlungsnetz (44) verbunden ist, und eine Batterie (24), die der Anspeisung verschiedener Elemente des Gerätes dient und mittels der Stromversorgung (47) der Anschlußeinheit wiederaufgeladen werden kann, ein Gerät, dadurch gekennzeichnet, daß seine Batterie (24) permanent durch die Stromversorgung (47) der Anschlußeinheit (40) wiederaufgeladen wird und daß es ausschließlich über die Anschlußeinheit (40) an das Wählvermittlungsnetz (44) angeschlossen wird (53).
